# FASCICULE DE BREVET EUROPEEN

(11) **EP 3 135 951 B1**
(45) Date de publication et mention de la délivrance du brevet: **06.02.2019**
(21) Numéro de dépôt: 16185031.8
(22) Date de dépôt: 19.08.2016
(51) Int. Cl.: F03G 1/10, F16F 9/32, F15B 15/14

(54) **ACTIONNEUR TÉLESCOPIQUE LINÉAIRE**
LINEARES TELESKOPSTELLGLIED
LINEAR TELESCOPIC ACTUATOR

(30) Priorité: 27.08.2015 FR 1557960
(43) Date de publication de la demande: 01.03.2017
(73) Titulaire: Safran Landing Systems Canada Inc., Ajax, Ontario L1S 2G8 (CA)
(72) Inventeur: ATAMAN, Gary, Whitby, Ontario L1P1L5 (CA)
(74) Mandataire: Lavialle, Bruno François Stéphane

(56) Documents cités:
- FR-A1- 2 596 835
- US-A1- 2006 231 991
- US-B1- 6 263 779

## Description

### ARRIERE PLAN DE L'INVENTION

L'invention concerne le domaine des actionneurs télescopiques linéaires comportant une pièce coulissante à l'intérieur d'un cylindre et au moins un ressort pour pouvoir s'opposer élastiquement au rapprochement de cette pièce coulissante vis-à-vis d'un siège de ressort.

Plus précisément, l'invention concerne un actionneur télescopique linéaire comprenant :
- un cylindre ;
- une pièce coulissante s'étendant au moins partiellement à l'intérieur du cylindre pour y coulisser suivant un axe de coulissement,
- un siège de ressort au moins partiellement disposé à l'intérieur du cylindre ; et
- au moins un premier ressort de compression disposé à l'intérieur du cylindre, entre ladite pièce coulissante et le siège de ressort pour pouvoir s'opposer élastiquement au rapprochement de cette pièce coulissante vis-à-vis du siège de ressort.

Pour que l'actionneur puisse fonctionner correctement, le siège de ressort doit être fixé de manière suffisamment résistante vis-à-vis du cylindre afin de permettre d'exercer avec le ressort, un effort élastique s'opposant au rapprochement de la pièce coulissante vis-à-vis du siège de ressort.

### OBJET DE L'INVENTION

Un objet de la présente invention est de fournir un actionneur linéaire du type précédemment défini et permettant un assemblage simplifié du siège de ressort vis-à-vis du cylindre de l'actionneur.

Le document US 2006/0231991 A1 montre un actionneur télescopique linéaire comprenant un cylindre, une pièce coulissante s'étendant au moins partiellement à l'intérieur du cylindre pour y coulisser suivant un axe de coulissement, un flasque au moins partiellement disposé à l'intérieur du cylindre, et au moins un premier ressort à gaz disposé à l'intérieur du cylindre, entre ladite pièce coulissante et le flasque pour pouvoir s'opposer élastiquement au rapprochement de cette pièce coulissante vis-à-vis du flasque, où le flasque présente un épaulement annulaire externe et le cylindre comporte une gorge annulaire interne, l'actionneur présentant en outre une pièce de blocage, l'actionneur étant adapté à adopter sélectivement une configuration assemblée et une configuration désassemblée, en configuration assemblée la pièce de blocage est engagée à l'intérieur de la gorge annulaire interne et forme un obstacle s'opposant au coulissement du flasque par rapport au cylindre et en configuration désassemblée la pièce de blocage est dégagée de la gorge annulaire interne et écartée de l'épaulement annulaire externe pour autoriser le coulissement relatif du flasque par rapport au cylindre, la pièce de blocage et la gorge annulaire interne et l'épaulement annulaire externe étant adaptées à :
autoriser le passage de l'actionneur de sa configuration assemblée à sa configuration désassemblée lorsqu'une première force est exercée sur le flasque, suivant ledit axe de coulissement et dans un premier sens allant du flasque vers le ressort. Le passage de l'actionneur de sa configuration assemblée à sa configuration désassemblée se faisant lorsqu'une force est exercée sur le flasque suivant un second sens opposé audit premier sens pour forcer l'épaulement annulaire externe contre la pièce de blocage, cette pièce de blocage étant également insérée dans la gorge annulaire interne.

### RESUME DE L'INVENTION

A cette fin, selon l'invention, il est proposé un actionneur télescopique linéaire du type précité et essentiellement caractérisé en ce que le siège de ressort présente une gorge annulaire externe et le cylindre comporte une gorge annulaire interne, l'actionneur présentant en outre une pièce de blocage, l'actionneur étant adapté à adopter sélectivement une configuration assemblée et une configuration désassemblée, en configuration assemblée la pièce de blocage est engagée à l'intérieur des gorges annulaires interne et externe et forme un obstacle s'opposant au coulissement du siège de ressort par rapport au cylindre et en configuration désassemblée la pièce de blocage est dégagée de l'une au moins des gorges annulaires interne et externe pour autoriser le coulissement relatif du siège de ressort par rapport au cylindre, la pièce de blocage et les rainures annulaires interne et externe étant adaptées à :
A) autoriser le passage de l'actionneur de sa configuration assemblée à sa configuration désassemblée lorsqu'une première force est exercée sur le siège de ressort, suivant ledit axe de coulissement et dans un premier sens allant du siège de ressort vers le ressort, cette première force présentant une première intensité supérieure à un seuil minimum prédéterminé ; et à
B) interdire le passage de l'actionneur de sa configuration assemblée à sa configuration désassemblée :
   - lorsqu'une force est exercée sur le siège de ressort suivant ledit premier sens avec une intensité inférieure ou égale au seuil minimum prédéterminé ; ou
   - lorsqu'une force est exercée sur le siège de ressort suivant un second sens opposé audit premier sens.

Grâce à l'agencement particulier de la pièce de blocage, de la gorge annulaire interne réalisée à l'intérieur du cylindre et de la gorge annulaire externe réalisée autour du siège de ressort, la pièce de blocage forme un obstacle au coulissement / déplacement du siège de ressort inséré à l'intérieur du cylindre.

En d'autres termes, cet agencement particulier est tel que seule l'application de la première force orientée dans le premier sens, c'est-à-dire allant du siège de ressort vers le ressort, commande le désengagement de la pièce de blocage vis-à-vis de l'une des rainures pour ainsi autoriser le coulissement du siège par rapport au cylindre. Si l'on exerce sur le siège de ressort une poussée du siège vis-à-vis du cylindre orientée dans le second sens, c'est-à-dire allant du ressort vers le siège de ressort, ou orientée dans le premier sens mais d'intensité inférieure ou égale au seuil minimum prédéterminé, on constate alors que l'actionneur reste dans sa configuration assemblée.

Ce seuil minimum prédéterminé est utilisé pour sécuriser l'assemblage et interdire un désassemblage lorsque l'effort exercé suivant le premier sens est de trop faible intensité. Idéalement on dimensionne la pièce de blocage et les rainures annulaires interne et externe pour que ce seuil minimum prédéterminé corresponde à un effort important généré avec un outil spécifique de désassemblage.

La pièce de blocage est précontrainte élastiquement de manière à ce que le seuil minimum prédéterminé nécessaire pour autoriser le désassemblage de l'actionneur soit supérieur aux forces normales G ou aux forces hydrauliques appliquées sur le siège de ressort de l'actionneur utilisé dans des conditions normales d'utilisation prédéterminées.

Grâce à l'invention, même lorsque le ressort dysfonctionne, le siège de ressort reste assemblé et résiste audites forces normales G ou aux forces hydrauliques.

Dans des applications particulières, on peut fixer ce seuil minimum prédéterminé nécessaire au passage de la configuration assemblée à la configuration désassemblée entre 400 et 4500 Newtons.

De même, on peut dimensionner les gorges et la pièce de blocage pour que la force (aussi nommée première force F1) selon le second sens exercée pour permettre le passage de l'actionneur de sa configuration assemblée à sa configuration désassemblée soit d'intensité comprise entre 400 et 4500 Newtons.

L'invention permet ainsi de réaliser un assemblage simple et sécurisé entre le siège de ressort et le cylindre. Comme cet assemblage nécessite peu de pièces, c'est-à-dire uniquement une pièce de blocage, le siège de ressort et le cylindre, il permet aussi une réduction de masse et de coût non négligeable.

Dans une mode particulier de réalisation de l'actionneur linéaire télescopique selon l'invention, la pièce de blocage est un anneau élastique ouvert qui est adapté, sous l'action de ladite première force, à se désengager de la gorge annulaire externe du siège de ressort en se déplaçant vers l'intérieur de la gorge annulaire interne du cylindre, de manière à autoriser le déplacement du siège de ressort par rapport audit cylindre suivant ledit premier sens.

L'usage d'un tel anneau élastique permet d'avoir une répartition des efforts liés à l'assemblage entre le siège de ressort et le cylindre sur une grande longueur de la gorge annulaire externe du siège et sur une grande longueur de la gorge annulaire interne du cylindre. Ceci limite les phénomènes de blocage de la pièce de blocage trop contrainte puisque les efforts qu'elle doit supporter sont répartis sur toute la longueur de l'anneau inséré dans ces gorges. Typiquement, l'assemblage est prévu pour pouvoir subir au moins 10 assemblages désassemblages.

Dans une mode particulier de réalisation de l'actionneur selon l'invention, la gorge annulaire externe du siège de ressort présente des premier et second épaulements disposés pour être de part et d'autre de la pièce de blocage lorsque l'actionneur est en configuration assemblée. Le premier épaulement est agencé pour s'opposer au déplacement du siège par rapport au cylindre suivant le premier sens et le second épaulement est agencé pour s'opposer au déplacement du siège par rapport au cylindre suivant le second sens, la gorge annulaire externe du siège de ressort présentant :
- un premier rayon externe de longueur R1 mesurée au niveau de son premier épaulement ; et
- un rayon externe minimum de longueur Rmin mesurée entre les premier et second épaulements,
la gorge annulaire interne du cylindre, la gorge annulaire externe du siège, et la pièce de blocage étant dimensionnées pour que lorsque l'actionneur est en configuration assemblée, la pièce de blocage soit alors écartée du fond de la gorge annulaire interne du cylindre d'une distance Dx supérieure à l'écart R1-Rmin.

Comme la distance Dx entre le fond de la gorge annulaire interne du cylindre et la pièce de blocage est choisie pour être supérieure à R1-Rmin, on est certain que lors du coulissement du siège par rapport au cylindre selon le premier sens, cette pièce de blocage reste toujours éloignée du fond de la rainure annulaire interne du cylindre. On réduit ainsi le risque de blocage du coulissement du siège par rapport au cylindre lorsque la pièce de blocage est en vis-à-vis du premier épaulement de rayon R1 et que l'actionneur est en configuration assemblée.

Le passage de l'actionneur de sa configuration assemblée, à sa configuration désassemblée est ainsi sécurisé.

Idéalement, la pièce de blocage est en forme d'anneau ouvert qui lorsque observé dans un plan de section radiale est de section circulaire, cette section circulaire étant homogène sur une majeur partie de longueur de l'anneau ouvert et présentant un rayon R3, la gorge annulaire externe du siège de ressort présentant un second rayon externe de longueur R2 mesurée au niveau de son second épaulement, le rayon R3 étant inférieur ou égal à l'écart R2-Rmin.

De cette manière, lorsque le siège est forcé dans le second sens de déplacement alors que la pièce de blocage en forme d'anneau élastique ouvert est plaquée au fond de la gorge annulaire externe du siège, un bord de la gorge annulaire interne du cylindrique vient forcément en appui contre une portion de la pièce de blocage pour la contraindre radialement en direction du siège de ressort et ainsi s'opposer au déplacement du siège par rapport au cylindre selon ce second sens. Plus l'effort exercé pour pousser le siège selon ce second sens est important et plus la pièce de blocage est serrée radialement et de manière concentrique contre la gorge externe du siège. Ceci interdit toute extraction du siège vis-à-vis du cylindre lorsque le siège est poussé selon le second sens.

Selon ce mode particulier de réalisation de l'actionneur linéaire télescopique selon l'invention, on peut faire en sorte que la pièce de blocage en forme d'anneau ouvert soit élastique de manière à exercer contre la gorge annulaire externe du siège de ressort un effort élastique s'opposant au passage de l'actionneur de sa configuration assemblée à sa configuration désassemblée.

En d'autres termes, lorsque l'actionneur est en configuration assemblée et que le siège est poussé selon le premier sens par rapport au cylindre, l'anneau élastique ouvert est plaqué au fond de la gorge annulaire externe du siège. Cet anneau exerce alors une force élastique contre la gorge annulaire externe du siège pour forcer le retour de cet anneau au fond de la gorge et par conséquent le maintien de l'actionneur en configuration assemblée.

L'invention concerne aussi un aéronef, comportant un actionneur selon l'un quelconque des modes de réalisation de l'invention.

### BREVE DESCRIPTION DES DESSINS

D'autres caractéristiques et avantages de l'invention ressortiront clairement de la description qui en est faite ci-après, à titre indicatif et nullement limitatif, en référence aux dessins annexés, dans lesquels:
- La figure 1 présente une vue en coupe longitudinale d'une partie d'actionneur télescopique linéaire selon l'invention ;
- Les figures 2a, 2b, 2c, 2d illustrent les étapes d'assemblage du siège de ressort vis-à-vis du cylindre de l'actionneur selon l'invention ainsi que les forces F0, F1, F2 appliquées sur ce siège de ressort à chacune de ces étapes d'assemblage ;
- Les figures 2e et 2f illustrent les étapes de désassemblage du siège de ressort vis-à-vis du cylindre de l'actionneur selon l'invention ainsi que les forces appliquées sur le siège de ressort à chacune de ces étapes de désassemblage ;
- La figure 3a illustre une vue en coupe radiale de la pièce de blocage en forme d'anneau élastique avant son utilisation pour assembler le siège de ressort dans le cylindre de l'actionneur selon l'invention, à cette étape, la pièce de blocage en forme d'anneau élastique est au repos et présente un rayon interne R0 ;
- La figure 3b illustre toujours la pièce de blocage en forme d'anneau élastique vue en coupe radiale lors de l'étape d'assemblage 2c, c'est-à-dire au moment où la pièce de blocage est en vis-à-vis d'un des épaulements de gorge du siège de ressort, une force de poussée F0 dirigée selon un second sens est exercée sur le siège de ressort de manière à insérer la pièce de blocage dans la gorge annulaire externe du siège de ressort ;
- La figure 3c illustre la pièce de blocage vue en coupe radiale lors de l'étape d'assemblage 2d, c'est-à-dire au moment où la pièce de blocage est insérée dans la gorge annulaire externe du siège de ressort et dans la gorge annulaire interne du cylindre, l'actionneur linéaire selon l'invention étant ainsi assemblé ;
- La figure 3d illustre la pièce de blocage vue en coupe radiale recevant un effort de poussée F2 exercé par le ressort sur le siège de ressort lors du fonctionnement de l'actionneur linéaire selon l'invention ;
- La figure 3e illustre la pièce de blocage soumise à un effort de désassemblage F1 orienté dans un premier sens et exercé sur le siège de ressort, la pièce de blocage étant élargie élastiquement par le passage du premier épaulement de la gorge annulaire externe du siège de ressort ;
- La figure 4 est une vue en coupe transversale du siège de ressort dans un plan passant par le fond de la gorge annulaire externe et contre lequel la pièce de blocage en forme d'anneau ouvert exerce un serrage élastique concentrique ;
- La figure 5 est une vue schématisée en coupe radiale de la pièce de blocage au moment du désassemblage du siège de ressort vis-à-vis du cylindre, ce désassemblage est provoqué sous l'effet d'un effort de poussée F1 orienté dans un premier sens, la pièce de blocage générant alors sur le premier épaulement, un effort élastique s'opposant à l'extraction de la pièce de blocage hors de la gorge annulaire externe du siège de ressort ;
- La figure 6 est une vue en coupe d'une portion de l'actionneur selon l'invention, dans le plan radial de la pièce de blocage en forme d'anneau élastique, cette figure illustrant les dimensions relatives du siège de ressort, des gorges annulaires interne et externe et de la pièce de blocage placée dans ces gorges pour maintenir l'actionneur dans sa configuration assemblée.
- La figure 7 est une vue en perspective de l'anneau élastique 8 alors qu'il est en train d'être retiré de la gorge annulaire interne 7 du cylindre 2 à l'aide d'un outil manuel 20 qui comprend une boucle ou un crochet conformé pour tenir une extrémité de l'anneau 8.

### DESCRIPTION DETAILLEE DE L'INVENTION

Comme indiqué précédemment, l'invention concerne un actionneur télescopique linéaire 1 de type vérin hydraulique linéaire télescopique.

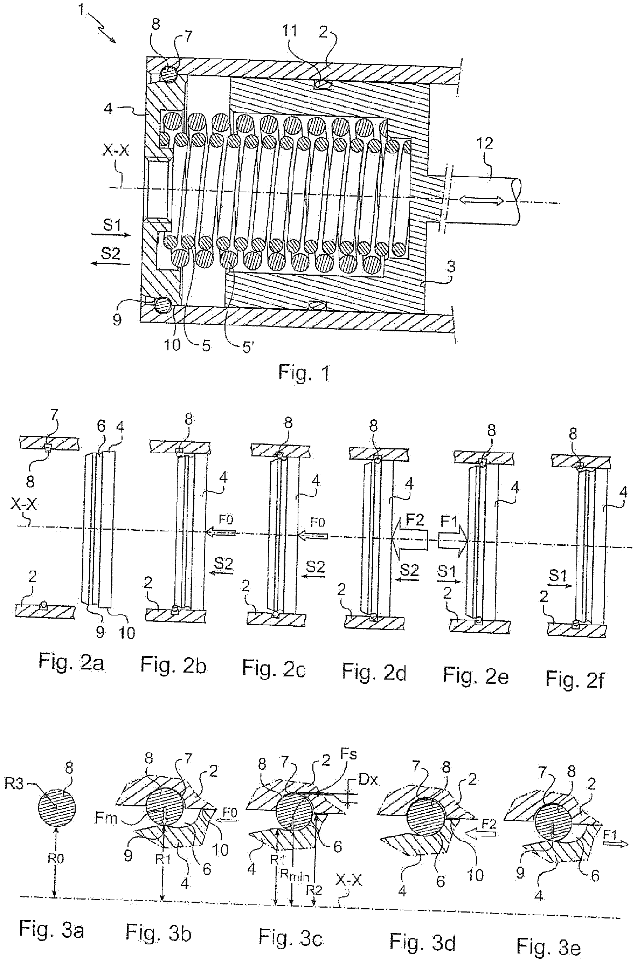

Comme illustré sur la figure 1, cet actionneur 1 selon l'invention comporte :
- un cylindre creux 2 présentant une surface interne cylindrique droite d'axe de symétrie X-X ;
- une pièce coulissante 3 s'étendant au moins partiellement à l'intérieur du cylindre 2 pour y coulisser suivant l'axe de coulissement X-X à la manière d'un piston dans un cylindre ;
- un siège de ressort 4 au moins partiellement disposé à l'intérieur du cylindre 2 ; et
- au moins un premier ressort de compression 5, en l'occurrence des premier et second ressorts 5, 5', disposés, à l'intérieur du cylindre 2, entre ladite pièce coulissante 3 et le siège de ressort 4 pour pouvoir s'opposer élastiquement au rapprochement de cette pièce coulissante 3 vis-à-vis du siège de ressort 4.

Les ressorts 5, 5' sont des ressorts de compression préférentiellement à spires et préférentiellement cylindriques. Ces ressorts 5, 5' sont disposés de manière coaxiale, le premier ressort 5 étant placé à l'intérieur du second ressort 5'. Le premier ressort 5 est un ressort à droite alors que le second ressort 5' est un ressort à gauche ce qui limite le risque de chevauchement entre les spires des ressorts 5, 5' .

Le cylindre 2 et la pièce coulissante 3 sont des pièces de révolution symétriques autour de l'axe de coulissement X-X. Un joint annulaire 11, de type joint torique, s'étend autour de la pièce coulissante 3, entre cette pièce 3 et le cylindre 2 pour que cette pièce 3 puisse coulisser de manière étanche dans le cylindre 2 selon l'axe X-X.

Ainsi, d'un côté de la pièce coulissante 3, on crée une chambre pouvant être mise sous pression à l'aide d'un fluide hydraulique pour commander le déplacement de cette pièce 3 dans le cylindre 2. Une tige 12 de l'actionneur télescopique s'étend depuis cette pièce coulissante 3 pour transmettre des efforts mécaniques entre cette pièce 3 et un système externe au cylindre.

Le siège de ressort 4 présente une gorge annulaire externe 6 et le cylindre 2 comporte une gorge annulaire interne 7, chacune de ces deux gorges étant symétrique autour de l'axe X-X.

Ces gorges annulaires externe et interne 6, 7 sont formées pour pouvoir être placées en vis-à-vis l'une de l'autre lorsque le siège de ressort 4 est placé dans le cylindre 2 avec l'actionneur 1 en configuration assemblée.

L'actionneur 1 présente aussi une pièce de blocage 8 permettant d'assembler sélectivement le siège 4 et le cylindre 2 via leurs gorges 6, 7 respectives.

L'actionneur 1 adopte sélectivement une configuration assemblée présentée sur les figures 1, 2d, 2e, 3c, et une configuration désassemblée présentée sur la figure 2a.

Dans la configuration assemblée, la pièce de blocage 8 est engagée à l'intérieur de gorge annulaire interne 6 et à l'intérieur de la gorge annulaire externe 7 et forme un ainsi un obstacle s'opposant au coulissement du siège de ressort 4 par rapport au cylindre 2.

En configuration désassemblée, comme présenté sur la figure 2a, la pièce de blocage 8 est dégagée de la gorge annulaire externe 6 du siège et le coulissement du siège de ressort 4 par rapport au cylindre 2 est alors autorisé.

Comme on le voit en particulier sur les figures 2e et 2f, la pièce de blocage 8 et les rainures annulaires interne 7 et externe 6 sont conformées pour autoriser le passage de l'actionneur 1 de sa configuration assemblée à sa configuration désassemblée lorsqu'une première force F1 est exercée sur le siège de ressort 4, suivant l'axe de coulissement X-X et dans un premier sens S1 allant du siège de ressort 4 vers le ressort 5. Cette première force F1 présente une première intensité supérieure à un seuil minimum prédéterminé. Le choix de ce seuil minimum prédéterminé est conditionné par le type d'efforts que doit subir l'actionneur lors de l'utilisation normale de l'actionneur au cours de laquelle on souhaite éviter un risque de désassemblage de l'actionneur. Typiquement, ce seuil est choisi pour résister à des accélérations normalement subies par l'actionneur lorsqu'il est embarqué sur un véhicule tel qu'un aéronef, ainsi qu'aux variations normales de pression subie par l'actionneur.

La pièce de blocage 8 et les rainures annulaires interne 7 et externe 6 sont aussi conformées pour interdire le passage de l'actionneur de sa configuration assemblée à sa configuration désassemblée :
- lorsqu'une force est exercée sur le siège de ressort 4 suivant ledit premier sens S1 avec une intensité inférieure ou égale au seuil minimum prédéterminé ; et aussi
- lorsqu'une force F2 est exercée sur le siège de ressort 4 suivant un second sens S2 opposé audit premier sens S1.

Grâce à cet agencement particulier selon l'invention, on constate qu'en réaction à un effort de poussée du siège par rapport au cylindre dirigé dans un premier sens S1, la pièce de blocage 8 :
- reste insérée simultanément dans les gorges annulaires interne 7 et externe 6 tant que cet effort de poussée présente une intensité inférieure ou égale à un seuil minimum prédéterminé, interdisant ainsi le coulissement du siège 4 vis-à-vis du cylindre 2 ; et
- se désengage de la gorge externe 6 en coulissant vers l'autre gorge 7 dès que cet effort de poussée orienté dans le premier sens S1 devient supérieur au seuil minimum non nul prédéterminé, il s'agit alors d'une force F1.

L'effort de poussée F1 nécessaire pour autoriser le passage de la configuration assemblée à la configuration désassemblée est appelé première force F1. Le siège de ressort, la gorge annulaire externe et la pièce de blocage 8 sont conformés de manière à ce que la première force F1 puisse être générée par un opérateur à l'aide d'un simple outil manuel d'extraction 20.

Tant que cette première force F1 n'est pas appliquée sur le siège de ressort 4, le siège de ressort 4 reste assemblé avec le cylindre 2. Ainsi, même en cas de rupture des ressorts de compression 5, 5', tant que l'on n'exerce pas cette première force F1, le siège de ressort 4 reste assemblé vis-à-vis du cylindre 2 et son coulissement reste interdit par rapport au cylindre 2.

Ceci limite le risque de désassemblage accidentel du siège de ressort et le risque de disséminer des parties de ressort 5, 5' hors du cylindre 2.

Grâce à ce même agencement particulier, on constate qu'en réaction à un effort de poussée du siège par rapport au cylindre dirigé dans un second sens S2 opposé au premier sens S1, c'est-à-dire allant du ressort 5 vers le siège de ressort 4, la pièce de blocage 8 reste engagée à l'intérieur des gorges interne et externe et interdit le coulissement du siège de ressort selon le second sens S2 par rapport au cylindre. L'actionneur 1 est ainsi maintenu en configuration assemblée. Le fait d'exercer une force, même minime, sur le siège de ressort orientée dans le second sens S2, s'oppose au désassemblage du siège de ressort vis-à-vis du cylindre. On note que lors du rapprochement de la pièce coulissante 3 vers le siège de ressort, les ressorts de compression 5 et 5' sont alors comprimés et génèrent un effort élastique F2 sur le siège de ressort 4 qui peut dépasser largement l'intensité de la force F1 de désassemblage. Même si F2 est très importante relativement à F1, on constate que l'assemblage du siège vis-à-vis du cylindre résiste puisque F2 est orienté dans le second sens S2. Il est à noter que le profil du siège de ressort est conformé pour que l'on ait F0<F1<F2.

Il est à noter que la force exercée sur le siège de ressort à un instant donné est somme de l'ensemble des vecteurs force parallèles à l'axe X-X et appliqués sur ce siège à cet instant donné. Ainsi, même si les deux ressorts 5, 5' appliquent un effort élastique de poussée du siège 4 selon le second sens S2 alors qu'un effort de poussée est également exercé sur le siège 4 selon le premier sens S1, pour que la première force F1 autorisant le passage de l'actionneur de sa configuration assemblée vers sa configuration désassemblée soit atteinte, il faudra que la somme des vecteurs force exercés sur le siège (parallèlement à l'axe X-X) forme une force globale F1 orientée dans le premier sens et d'intensité supérieure au seuil minimum prédéterminé.

Il est à noter que même en cas de rupture du ressort ou des ressorts, il y a une très grande probabilité pour que l'on ait au moins une portion des ressorts 5, 5' qui exerce un effort de poussée du siège de ressort 4 selon le second sens S2. Ainsi, même en cas de rupture de ressort, la pièce de blocage reste en partie dans la rainure annulaire interne 7 et en partie dans la rainure annulaire externe 6 et maintient le siège de ressort assemblé fixement à l'intérieur du cylindre tout en interdisant le passage de la configuration assemblée à la configuration désassemblée.

Pour réaliser ces fonctions, la pièce de blocage 8 est un anneau élastique ouvert. La gorge annulaire externe 6 du siège de ressort 4 présente des premier et second épaulements 9, 10 disposés de part et d'autre de la pièce de blocage 8 lorsque l'actionneur 1 est en configuration assemblée.

Comme illustré en particulier sur les figures 3c, 4, 5 et 6, le premier épaulement 9 s'oppose au déplacement du siège de ressort 4 par rapport au cylindre 2 suivant le premier sens S1. Le second épaulement 10 s'oppose au déplacement du siège de ressort 4 par rapport au cylindre 2 suivant le second sens S2.

La gorge annulaire externe 6 du siège de ressort 4 présente:
- un premier rayon externe de longueur R1 mesurée au niveau de son premier épaulement 9 ; et
- un rayon externe minimum de longueur Rmin mesurée entre les premier et second épaulements 9, 10.

Il est à noter que le rayon intérieur R0 de la pièce de blocage 8 en forme d'anneau élastique au repos est défini de manière à avoir R0<Rmin<R1<R2. En conséquence, lorsque l'anneau élastique 8 entoure le premier épaulement 9, il exerce sur cet épaulement, un effort radial Fm qui est supérieur à la force radiale Fs exercée par l'anneau élastique 8 lorsqu'il entoure la gorge annulaire externe 6.

Ainsi, l'anneau élastique 8 a tendance à se déplacer le long du siège de ressort 4 depuis l'épaulement 9 vers la gorge 6 et il a tendance à rester dans la gorge 6.

La pièce de blocage 8 est définie pour être pré contrainte élastiquement de manière à maintenir le siège 4 en position assemblée :
- même sous l'effet d'une double défaillance des deux ressorts 5, 5', c'est à dire lorsqu'aucun des ressorts exerce un effort élastique contre le siège 4; et
- même lorsque le ressort 4 est poussé suivant le premier sens S1 sous l'action d'une force de travail inférieure à F1, cette force F1 étant supérieure aux forces normales G et aux forces de flux hydraulique qui agissent sur le siège de ressort.

La pièce de blocage 8 est en forme d'anneau ouvert qui lorsque observé dans un plan de section radiale, comme c'est le cas sur l'ensemble des figures, est de section circulaire, homogène sur une majeur partie de longueur de l'anneau. Cette section circulaire homogène est de rayon R3.

La gorge annulaire interne 7 du cylindre 2 est de section radiale semi circulaire de rayon R4 supérieur ou égal au rayon R3 pour permettre le coulissement de l'anneau dans la gorge 7 lors de l'assemblage. Ce rayon 4 est ajustable pour faire varier la force de retenue-versement pour engager ou désengager le siège de ressort 4.

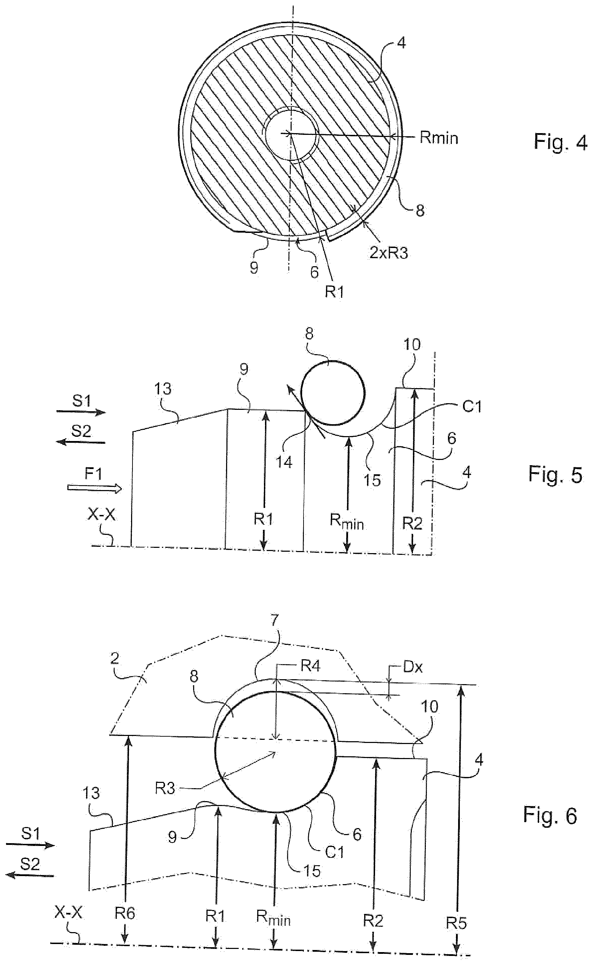

La gorge annulaire externe 6 du siège de ressort 4 et la pièce de blocage 8 sont dimensionnées pour que lorsque l'actionneur 1 est en configuration assemblée, comme sur la figure 6, la pièce de blocage 8 reste écartée du fond de la gorge annulaire interne 7 d'une distance Dx supérieure à l'écart R1-Rmin.

La gorge annulaire externe 6 du siège de ressort 4 présente un second rayon externe de longueur R2 mesurée au niveau de son second épaulement 10, le rayon R3 étant inférieur à l'écart R2-Rmin. Ceci permet de forcer le calage de la pièce de blocage 8 dans la gorge externe 6 lorsque le siège 4 est poussé dans le sens S2.

La gorge annulaire externe 6 est conformée, entre le fond de la gorge et le second épaulement 10, pour présenter un chanfrein C1 de forme complémentaire au profil de la pièce de blocage 8 afin de réaliser un appui continu de la pièce de blocage contre ce chanfrein sur toute la longueur de cette pièce de blocage 8. En l'occurrence, comme cette pièce de blocage 8 est de section radiale cylindrique, la partie de la gorge annulaire externe qui s'étend entre le fond de la gorge 6 et le second épaulement 10 est constituée par un chanfrein C1 de profil circulaire et de rayon identique au rayon R3 de la pièce de blocage vue en section radiale.

Une extrémité du siège de ressort 4 présente un chanfrein annulaire conique 13 prévu pour guider la pièce de blocage 8 autour du siège 4 lors de l'insertion du siège 4 dans l'anneau élastique 8 déjà engagé dans la gorge annulaire interne 7 du cylindre 2.

Dans le mode de réalisation de la figure 5, l'angle d'ouverture du chanfrein 13 est inférieur à l'angle d'ouverture maximum du chanfrein 14 de la gorge 6, entre le fond 15 de gorge 6 et l'épaulement 9. De cette manière, l'intensité de la poussée dans le sens S2 qui est nécessaire au passage de l'actionneur d'une configuration désassemblée à sa configuration assemblée est inférieure à l'intensité de la première force F1 nécessaire pour commander le passage de l'actionneur de sa configuration assemblée à sa configuration désassemblée. On note qu'en configuration désassemblée, la pièce de blocage 8 s'étend dans la rainure annulaire interne 7 du cylindre 2 et est placée en dehors de la rainure annulaire externe 6 du siège de ressort 4, ce siège de ressort 4 étant alors éloigné de la pièce de blocage 8.

Enfin, on note que le second épaulement 10 présente un diamètre R2 inférieur à un diamètre interne R6 du cylindre pour permettre le centrage / guidage du siège 4 dans le cylindre 2.

En d'autres mots, une première extrémité du siège de ressort 4 présente un chanfrein annulaire 13 conformé pour guider la pièce de blocage 8 en forme d'anneau ouvert autour du siège de ressort 4 alors que ledit siège de ressort 4 est déplacé de manière à approcher la pièce de blocage 8 vis-à-vis de la gorge annulaire externe 6 du siège de ressort 4 et alors que la pièce de blocage 8 est en contact contre chanfrein annulaire 13.

Le premier chanfrein annulaire 13 et ladite pièce de blocage 8 sont conformés pour que le déplacement du siège de ressort 4 de manière à approcher la pièce de blocage 8 vis-à-vis de la gorge annulaire externe 6 du siège de ressort 4 puisse être effectué en appliquant un effort axial de déplacement F0 sur le siège de ressort 4 inférieur à 200 newtons.

L'angle d'évasement du premier chanfrein 13 est ajusté en fonction de la force F0 nécessaire pour engager la pièce de blocage 8 et réaliser l'assemblage.

Plus précisément, cet angle est défini de manière à ce que l'assemblage soit réalisé avec une petite force humaine d'assemblage F0. Typiquement, une petite force humaine d'assemblage est une force inférieure à 200 newtons.

Un côté de la gorge annulaire externe 6 qui est adjacent dudit premier chanfrein annulaire 13 est formé par un second chanfrein annulaire 14. Ce second chanfrein annulaire 14 est conformé pour guider la pièce de blocage 8 en forme d'anneau ouvert autour du siège de ressort 4 alors que ledit siège de ressort 4 est déplacé de manière à écarter la pièce de blocage 8 vis-à-vis de la gorge annulaire externe 6 du siège de ressort 4 et alors que la pièce de blocage 8 est en contact contre ledit second chanfrein annulaire 14.

Le second chanfrein annulaire 14 et la pièce de blocage 8 sont conformés de manière à ce que le déplacement dudit siège de ressort 4, pour écarter la pièce de blocage 8 vis-à-vis de la gorge annulaire externe 6 du siège de ressort 4, puisse être effectué en appliquant ladite première force F1 sur le siège de ressort 4 suivant ledit axe de coulissement X-X et dans un premier sens S1.

L'angle d'évasement du second chanfrein 14 est ajusté en fonction de la force F1 souhaitée nécessaire pour désengager la pièce de blocage 8 vis-à-vis de la gorge annulaire externe pour réaliser le désassemblage de l'actionneur.

Plus précisément, l'angle d'évasement est défini de manière à ce que le désassemblage soit réalisé avec une force exercée par des outils d'extraction à main.

Il est à noter que les dimensions de l'actionneur, diamètres, rayons, angles d'évasements, élasticité de la pièce de blocage 8 et les matériaux des pièces de l'actionneur peuvent être adaptés / sélectionnés de manière à faciliter l'assemblage de l'actionneur par l'opérateur.

Il est à noter que les dimensions de l'actionneur, diamètres, rayons, angles d'évasements, élasticité de la pièce de blocage 8 et les matériaux des pièces de l'actionneur peuvent être adaptés / sélectionnés de manière à soit réduire soit augmenter la difficulté de désassemblage de l'actionneur par l'opérateur.

Ces caractéristiques sont définies pour maintenir des performances pendant plusieurs cycles, même si l'assemblage n'est généralement assemblé que quelques fois pendant sa durée de vie.

Enfin un taraudage fileté est réalisé à l'intérieur du siège 4, selon l'axe X-X, pour permettre de fileter un outil complémentaire utilisé pour forcer le déplacement du siège 4 dans le cylindre 2 afin d'assembler ou désassembler l'actionneur 1.

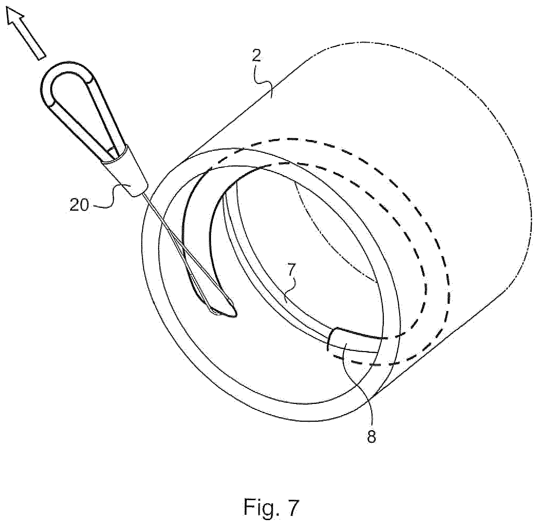

Comme illustré à la figure 7, l'extrémité de la pièce de blocage 8 est définie pour être simple à fabriquer et facile à extraire du cylindre 2 en utilisant le câble d'un outil manuel d'extraction 20 ou un tournevis plat. Dans le cas présent, l'extrémité de la pièce de blocage 8 est biseautée avec un bout de l'extrémité biseautée plus proche du diamètre intérieur de la pièce de blocage 8 que du diamètre extérieur de la pièce de blocage 8.

## Revendications

1. Actionneur télescopique linéaire (1) comprenant :
- un cylindre (2) ;
- une pièce coulissante (3) s'étendant au moins partiellement à l'intérieur du cylindre (2) pour y coulisser suivant un axe de coulissement (X-X) ;
- un siège de ressort (4) au moins partiellement disposé à l'intérieur du cylindre (2) ; et
- au moins un premier ressort de compression (5) disposé à l'intérieur du cylindre (2), entre ladite pièce coulissante (3) et le siège de ressort (4) pour pouvoir s'opposer élastiquement au rapprochement de cette pièce coulissante (3) vis-à-vis du siège de ressort (4), et où :
le siège de ressort (4) présente une gorge annulaire externe (6) et le cylindre (2) comporte une gorge annulaire interne (7), l'actionneur (1) présentant en outre une pièce de blocage (8), l'actionneur (1) étant adapté à adopter sélectivement une configuration assemblée et une configuration désassemblée, en configuration assemblée la pièce de blocage (8) est engagée à l'intérieur des gorges annulaires interne (6) et externe (7) et forme un obstacle s'opposant au coulissement du siège de ressort (4) par rapport au cylindre (2) et en configuration désassemblée la pièce de blocage (8) est dégagée de l'une au moins des gorges annulaires interne (7) et externe (6) pour autoriser le coulissement relatif du siège de ressort (4) par rapport au cylindre (2), la pièce de blocage (8) et les gorges annulaires interne (7) et externe (6) étant adaptées à :
A) autoriser le passage de l'actionneur de sa configuration assemblée à sa configuration désassemblée lorsqu'une première force (F1) est exercée sur le siège de ressort (4), suivant ledit axe de coulissement (X-X) et dans un premier sens (S1) allant du siège de ressort (4) vers le ressort (5), cette première force (F1) présentant une première intensité supérieure à un seuil minimum prédéterminé ; et à
B) interdire le passage de l'actionneur de sa configuration assemblée à sa configuration désassemblée :
- lorsqu'une force est exercée sur le siège de ressort (4) suivant ledit premier sens (S1) avec une intensité inférieure ou égale au seuil minimum prédéterminé ; ou
- lorsqu'une force (F2) est exercée sur le siège de ressort (4) suivant un second sens (S2) opposé audit premier sens (S1).

2. Actionneur selon la revendication 1, dans lequel, la pièce de blocage (8) est un anneau élastique ouvert adapté, sous l'action de ladite première force (F1), à se désengager de la gorge annulaire externe (6) du siège de ressort en se déplaçant vers l'intérieur de la gorge annulaire interne (7) du cylindre (2), de manière à autoriser le déplacement du siège de ressort (4) par rapport audit cylindre (2) suivant ledit premier sens (S1).

3. Actionneur selon la revendication 2, dans lequel la gorge annulaire externe (6) du siège de ressort (4) présente des premier et second épaulements (9, 10) disposés pour être de part et d'autre de la pièce de blocage (8) lorsque l'actionneur (1) est en configuration assemblée, le premier épaulement (9) étant agencé pour s'opposer au déplacement du siège de ressort (4) par rapport au cylindre (2) suivant le premier sens (S1) et le second épaulement (10) étant agencé pour s'opposer au déplacement du siège de ressort (4) par rapport au cylindre (2) suivant le second sens (S2), la gorge annulaire externe (6) du siège de ressort (4) présentant :
- un premier rayon externe de longueur R1 mesurée au niveau de son premier épaulement ; et
- un rayon externe minimum de longueur Rmin mesurée entre les premier et second épaulements (9, 10),
la gorge annulaire interne (7) du cylindre (2), la gorge annulaire externe (6) du siège de ressort (4) et la pièce de blocage (8) étant dimensionnées pour que lorsque l'actionneur (1) est en configuration assemblée, la pièce de blocage (8) soit alors écartée du fond de la gorge annulaire interne (7) du cylindre d'une distance Dx supérieure à l'écart R1-Rmin.

4. Actionneur selon la revendication 3, dans lequel la pièce de blocage (8) est en forme d'anneau ouvert qui lorsque observé dans un plan de section radiale est de section circulaire, cette section circulaire étant homogène sur une majeur partie de longueur de l'anneau ouvert et présentant un rayon R3, la gorge annulaire externe (6) du siège de ressort (4) présentant un second rayon externe de longueur R2 mesurée au niveau de son second épaulement (10), le rayon R3 étant inférieur ou égal à l'écart R2-Rmin.

5. Actionneur selon la revendication 4, dans lequel la pièce de blocage (8) en forme d'anneau ouvert est élastique de manière à exercer contre la gorge annulaire externe (6) du siège de ressort (4) un effort élastique s'opposant au passage de l'actionneur (1) de sa configuration assemblée à sa configuration désassemblée.

6. Actionneur selon la revendication 5, dans lequel une première extrémité du siège de ressort (4) présente un chanfrein annulaire (13) conformé pour guider la pièce de blocage (8) en forme d'anneau ouvert autour du siège de ressort (4) alors que ledit siège de ressort (4) est déplacé de manière à approcher la pièce de blocage (8) vis-à-vis de la gorge annulaire externe (6) du siège de ressort (4) et alors que la pièce de blocage (8) est en contact contre chanfrein annulaire (13).

7. Actionneur selon la revendication 6, dans lequel ledit chanfrein annulaire (13) et ladite pièce de blocage (8) sont conformés pour que le déplacement du siège de ressort (4) de manière à approcher la pièce de blocage (8) vis-à-vis de la gorge annulaire externe (6) du siège de ressort (4) puisse être effectué en appliquant un effort axial de déplacement (F0) sur le siège de ressort (4) inférieur à 200 newtons.

8. Actionneur selon l'une quelconque des revendications 6 ou 7, dans lequel un côté de la gorge annulaire externe (6) qui est adjacent dudit premier chanfrein annulaire (13) est formé par un second chanfrein annulaire (14), ce second chanfrein annulaire (14) étant conformé pour guider la pièce de blocage (8) en forme d'anneau ouvert autour du siège de ressort (4) alors que ledit siège de ressort (4) est déplacé de manière à écarter la pièce de blocage (8) vis-à-vis de la gorge annulaire externe (6) du siège de ressort (4) et alors que la pièce de blocage (8) est en contact contre ledit second chanfrein annulaire (14).

9. Actionneur selon la revendication 8, dans lequel ledit second chanfrein annulaire (14) et la pièce de blocage (8) sont conformés de manière à ce que le déplacement dudit siège de ressort (4) pour écarter la pièce de blocage (8) vis-à-vis de la gorge annulaire externe (6) du siège de ressort (4) puisse être effectué en appliquant ladite première force (F1) sur le siège de ressort (4) suivant ledit un axe de coulissement (X-X) et dans un premier sens (S1).

10. Aéronef, **caractérisé en ce qu'**il comporte un actionneur selon l'une quelconque des revendications précédentes.

## Patentansprüche

1. Linearer Teleskopaktor (1), umfassend:
- einen Zylinder (2);
- ein verschiebbares Teil (3), das sich zumindest teilweise im Inneren des Zylinders (2) erstreckt, um dort entlang einer Verschiebeachse (X-X) zu gleiten;
- einen Federsitz (4), der zumindest teilweise im Inneren des Zylinders (2) angeordnet ist; und
- mindestens eine erste Druckfeder (5), die im Inneren des Zylinders (2) zwischen dem verschiebbaren Teil (3) und dem Federsitz (4) angeordnet ist, um sich dem Annähern dieses verschiebbaren Teils (3) gegenüber dem Federsitz (4) elastisch widersetzen zu können, und wobei:
der Federsitz (4) eine äußere ringförmige Nut (6) aufweist und der Zylinder (2) eine innere ringförmige Nut (7) umfasst, wobei der Aktor (1) ferner ein Blockierteil (8) aufweist, wobei der Aktor (1) daran angepasst ist, selektiv eine zusammengesetzte Konfiguration und eine zerlegte Konfiguration anzunehmen, wobei das Blockierteil (8) in der zusammengesetzten Konfiguration in das Innere der inneren ringförmigen Nut (6) und der äußeren ringförmigen Nut (7) eingreift und ein Hindernis bildet, das sich dem Verschieben des Federsitzes (4) in Bezug auf den Zylinder widersetzt, und das Blockierteil (8) in der zerlegten Konfiguration aus der inneren ringförmigen Nut (7) und/oder der äußeren ringförmigen Nut (6) ausgerückt ist, um die Relativverschiebung des Federsitzes (4) in Bezug auf den Zylinder (2) zu gestatten, wobei das Blockierteil (8) und die innere ringförmige Nut (7) und die äußere ringförmige Nut (6) daran angepasst sind:
A) den Übergang des Aktors von seiner zusammengesetzten Konfiguration in seine zerlegte Konfiguration zu gestatten, wenn eine erste Kraft (F1) auf den Federsitz (4) entlang der Verschiebeachse (X-X) und in eine erste Richtung (S1) ausgeübt wird, die von dem Federsitz (4) zur Feder (5) geht, wobei diese erste Kraft (F1) eine erste Intensität aufweist, die größer als ein vorbestimmter Mindestschwellwert ist; und
B) den Übergang des Aktors von seiner zusammengesetzten Konfiguration in seine zerlegte Konfiguration zu verhindern:
- wenn eine Kraft auf den Federsitz (4) in der genannten ersten Richtung (S1) mit einer Intensität ausgeübt wird, die kleiner oder gleich dem vorbestimmten Mindestschwellwert ist; oder
- wenn eine Kraft (F2) auf den Federsitz (4) in einer zweiten Richtung (S2) ausgeübt wird, die der genannten ersten Richtung (S1) entgegengesetzt ist.

2. Aktor nach Anspruch 1, bei dem das Blockierteil (8) ein offener elastischer Ring ist, der dazu geeignet ist, unter der Wirkung der genannten ersten Kraft (F1) aus der äußeren ringförmigen Nut (6) des Federsitzes auszurücken, indem er sich ins Innere der inneren ringförmigen Nut (7) des Zylinders (2) bewegt, derart, dass die Bewegung des Federsitzes (4) in Bezug auf den genannten Zylinder (2) in der genannten ersten Richtung (S1) gestattet wird.

3. Aktor nach Anspruch 2, bei dem die äußere ringförmige Nut (6) des Federsitzes (4) eine erste und eine zweite Schulter (9, 10) aufweist, die so angeordnet sind, dass sie sich zu beiden Seiten des Blockierteils (8) befinden, wenn der Aktor in der zusammengesetzten Konfiguration ist, wobei die erste Schulter (9) so ausgebildet ist, dass sie sich der Bewegung des Federsitzes (4) in Bezug auf den Zylinder (2) in der ersten Richtung (S1) widersetzt, und die zweite Schulter (10) so ausgebildet ist, dass sie sich der Bewegung des Federsitzes (4) in Bezug auf den Zylinder (2) in der zweiten Richtung (S2) widersetzt, wobei die äußere ringförmige Nut (6) des Federsitzes (4) aufweist:
- einen ersten äußeren Radius der Länge R1, gemessen im Bereich seiner ersten Schulter; und
- einen minimalen äußeren Radius der Länge Rmin, gemessen zwischen der ersten und der zweiten Schulter (9, 10),
wobei die innere ringförmige Nut (7) des Zylinders (2), die äußere ringförmige Nut (6) des Federsitzes (4) und das Blockierteil (8) so bemessen sind, dass, wenn der Aktor (1) in der zusammengesetzten Konfiguration ist, das Blockierteil (8) von dem Boden der inneren ringförmigen Nut (7) des Zylinders um eine Distanz Dx beabstandet ist, die größer als der Abstand R1-Rmin ist.

4. Aktor nach Anspruch 3, bei dem das Blockierteil (8) die Form eines offenen Ringes hat, der, wenn er in einer radialen Schnittebene betrachtet wird, einen kreisförmigen Querschnitt hat, wobei dieser kreisförmige Querschnitt über einen großen Teil der Länge des offenen Ringes gleichförmig ist und einen Radius R3 aufweist, wobei die äußere ringförmige Nut (6) des Federsitzes (4) einen zweiten äußeren Radius der Länge R2 aufweist, gemessen im Bereich seiner zweiten Schulter (10), wobei der Radius R3 kleiner oder gleich dem Abstand R2-Rmin ist.

5. Aktor nach Anspruch 4, bei dem das Blockierteil (8) in Form eines offenen Ringes elastisch ist, derart, dass auf die äußere ringförmige Nut (6) des Federsitzes (4) eine elastische Kraft ausgeübt wird, die sich dem Übergang des Aktors (1) von seiner zusammengesetzten Konfiguration in seine zerlegte Konfiguration widersetzt.

6. Aktor nach Anspruch 5, bei dem ein erstes Ende des Federsitzes (4) eine ringförmige Fase (13) aufweist, die so geformt ist, dass sie das Blockierteil (8) in Form eines offenen Ringes um den Federsitz (4) führt, während der genannte Federsitz (4) derart bewegt wird, dass er das Blockierteil (8) gegenüber der äußeren ringförmigen Nut (6) des Federsitzes (4) annähert, und während das Blockierteil (8) in Kontakt mit der ringförmigen Fase (13) ist.

7. Aktor nach Anspruch 6, bei dem die genannte ringförmige Fase (13) und das genannte Blockierteil (8) so geformt sind, dass die Bewegung des Federsitzes (4) derart, dass das Blockierteil (8) gegenüber der äußeren ringförmigen Nut (6) des Federsitzes (4) angenähert wird, ausgeführt werden kann, indem eine axiale Bewegungskraft (F0) auf den Federsitz (4) ausgeübt wird, die kleiner als 200 Newton ist.

8. Aktor nach einem der Ansprüche 6 oder 7, bei dem eine Seite der äußeren ringförmigen Nut (6), die an die genannte erste ringförmige Fase (13) angrenzt, von einer zweiten ringförmigen Fase (14) gebildet ist, wobei diese zweite ringförmige Fase (14) geformt ist, um das Blockierteil (8) in Form eines offenen Ringes um den Federsitz (4) zu führen, während der Federsitz (4) derart bewegt wird, dass das Blockierteil (8) gegenüber der äußeren ringförmigen Nut (6) des Federsitzes (4) entfernt wird, und während das Blockierteil (8) in Kontakt mit der genannten zweiten ringförmigen Fase (14) ist.

9. Aktor nach Anspruch 8, bei dem die genannte zweite ringförmige Fase (14) und das Blockierteil (8) derart geformt sind, dass die Bewegung des Federsitzes (4) zum Entfernen des Blockierteils (8) gegenüber der äußeren ringförmigen Nut (6) des Federsitzes (4) ausgeführt werden kann, indem die genannte erste Kraft (F1) auf den Federsitz (4) entlang der genannten Verschiebeachse (X-X) und in einer ersten Richtung (S1) aufgebracht wird.

10. Luftfahrzeug, **dadurch gekennzeichnet, dass** es einen Aktor nach einem der vorhergehenden Ansprüche umfasst.

## Claims

1. A linear telescopic actuator (1) comprising:
• a cylinder (2);
• a sliding part (3) extending at least in part inside the cylinder (2) in order to slide therein along a sliding axis (X-X');
• a spring seat (4) that is arranged at least in part inside the cylinder (2); and
• at least a first compression spring (5) arranged inside the cylinder (2) between said sliding part (3) and the spring seat (4) in order to be capable of resiliently opposing the sliding part (3) approaching the spring seat (4), and wherein,
the spring seat (4) presents an outer annular groove (6) and the cylinder (2) includes an inner annular groove (7), the actuator (1) further presenting a blocking part (8), the actuator (1) being adapted to adopt selectively an assembled configuration and a disassembled configuration, the blocking part (8) in the assembled configuration being engaged inside the inner and outer annular grooves (6, 7) and forming an obstacle opposing sliding of the spring seat (4) relative to the cylinder (2), and the blocking part (8) in the disassembled configuration being disengaged from at least one of the inner and outer annular grooves (7, 6) in order to allow the spring seat (4) to slide relative to the cylinder (2), the blocking part (8) and the inner and outer annular grooves (7, 6) being adapted:
A) to allow the actuator to pass from its assembled configuration to its disassembled configuration when a first force (F1) is exerted on the spring seat (4) along said sliding axis (X-X) in a first direction (S1) going from the spring seat (4) towards the spring (5), this first force (F1) presenting a first magnitude greater than a predetermined minimum threshold; and
B) to prevent the actuator from passing from its assembled configuration to its disassembled configuration:
• when a force is exerted on the spring seat (4) in said first direction (S1) with a magnitude less than or equal to the predetermined minimum threshold; or
• when a force (F2) is exerted on the spring seat (4) in a second direction (S2) opposite to said first direction (S1).

2. An actuator according to claim 1, wherein the blocking part (8) is an open resilient ring adapted under the action of said first force (F1) to disengage from the outer annular groove (6) of the spring seat by moving towards the inside of the inner annular groove (7) of the cylinder (2) in such a manner as to allow the spring seat (4) to move relative to said cylinder (2) in said first direction (S1).

3. An actuator according to claim 2, wherein the outer annular groove (6) of the spring seat (4) presents first and second shoulders (9, 10) arranged to be on either side of the blocking part (8) when the actuator (1) is in the assembled configuration, the first shoulder (9) being arranged to oppose any movement of the spring seat (4) relative to the cylinder (2) in the first direction (S1), and the second shoulder (10) being arranged to oppose any movement of the spring seat (4) relative to the cylinder (2) in the second direction (S2), the outer annular groove (6) of the spring seat (4) presenting:
• a first outer radius of length R1 measured at its first shoulder; and
• a minimum outer radius of length Rmin measured between the first and second shoulders (9, 10);
the inner annular groove (7) of the cylinder (2), the outer annular groove (6) of the spring seat (4), and the blocking part (8) being dimensioned so that then the actuator (1) is in the assembled configuration, the blocking part (8) is spaced apart from the bottom of the inner annular groove (7) of the cylinder by a distance Dx greater than the difference R1-Rmin.

4. An actuator according to claim 3, wherein the blocking part (8) is in the form of an open ring that is circular in section when observed in a radial section plane, the circular section being uniform over a major portion of the length of the open ring and presenting a radius R3, the outer annular groove (6) of the spring seat (4) presenting a second outer radius of length R2 measured at its second shoulder (10), the radius R3 being less than or equal to the difference R2-Rmin.

5. An actuator according to claim 4, wherein the blocking part (8) in the form of an open ring is resilient so as to exert a resilient force against the outer annular groove (6) of the spring seat (4) opposing any passage of the actuator (1) from its assembled configuration to its disassembled configuration.

6. An actuator according to claim 5, wherein a first end of the spring seat (4) presents an annular chamfer (13) designed to guide the blocking part (8) in the form of an open ring around the spring seat (4) while said spring seat (4) is displaced so as to bring the blocking part (8) closer to the outer annular groove (6) of the spring seat (4) while the blocking part (8) is in contact with the annular chamfer (13).

7. An actuator according to claim 6, wherein, said annular chamfer (13) and said blocking part (8) are designed so that the displacement of the spring seat (4) so as to bring the blocking part (8) closer to the outer annular groove (6) of the spring seat (4) can be achieved by applying an axial displacement force (F0) on the spring seat (4) which is inferior to 200 Newton.

8. An actuator according to anyone of claim 6 or 7, wherein a side of the annular grove (6) adjacent to the first annular chamfer (13) is formed by a second annular chamfer (14), said second annular chamfer (14) being designed to guide the blocking part (8) in the form of an open ring around the spring seat (4) while said spring seat (4) is displaced so as to move the blocking part (8) away from the outer annular groove (6) of the spring seat (4) while the blocking part (8) is in contact with said second annular chamfer (14).

9. An actuator according to claim 8, wherein, said second annular chamfer (14) an said blocking part (8) are designed so that the displacement of the spring seat (4) so as to move the blocking part (8) away from the outer annular groove (6) of the spring seat (4) can be achieved by exerting said first force (F1) on the spring seat (4) along said sliding axis (X-X) in a first direction (S1).

10. An aircraft, **characterized in that** it includes an actuator according to any preceding claim.
